Europäisches Patentamt

European Patent Office

Office européen des brevets

(19)

(11) Veröffentlichungsnummer: **0 224 221 B1**

(12) **EUROPÄISCHE PATENTSCHRIFT**

(45) Veröffentlichungstag der Patentschrift: 24.07.91

(51) Int. Cl.⁵: **C09D 5/44**

(21) Anmeldenummer: 86116190.9

(22) Anmeldetag: 22.11.86

(54) **Bindemittel für die kathodische Elektrotauchlackierung.**

(30) Priorität: 29.11.85 DE 3542168

(43) Veröffentlichungstag der Anmeldung:
03.06.87 Patentblatt 87/23

(45) Bekanntmachung des Hinweises auf die
Patenterteilung:
24.07.91 Patentblatt 91/30

(84) Benannte Vertragsstaaten:
AT BE CH DE ES FR GB IT LI NL SE

(56) Entgegenhaltungen:
DE-A- 1 930 949
DE-A- 2 001 232
FR-A- 2 362 195

(73) Patentinhaber: BASF Lacke + Farben Aktiengesellschaft
Max-Winkelmann-Strasse 80
W-4400 Münster(DE)

(72) Erfinder: Schupp, Eberhard, Dr.
Tilsiter Weg 4
W-6830 Schwetzingen(DE)
Erfinder: Osterloh, Rolf, Dr.
Am Wehrhaus 16a
W-6718 Grüenstadt(DE)
Erfinder: Loch, Werner, Dr.
In der Bleiche 2
W-6701 Erpolzheim(DE)
Erfinder: Ahlers, Klaas, Dr.
Foehrenweg 21
W-4400 Münster(DE)

(74) Vertreter: Schweiss, Werner, Dr.
BASF Aktiengesellschaft Patentabteilung
Carl-Bosch-Strasse 38
W-6700 Ludwigshafen(DE)

## Beschreibung

Die vorliegende Erfindung betrifft durch Protonieren mit Säure wasserverdünnbare Bindemittel, welche zur Herstellung von kathodischen Elektrotauchlacken geeignet sind.

In der DE-AS 20 57 799 wird ein Verfahren zur kathodischen elektrophoretischen Abscheidung eines in Wasser dispergierten, ionischen, organischen Harzes, welches aus einem positiv geladenen, aminhaltigen Harz und einem blockierten, multifunktionellen Isocyanat besteht, beschrieben.

In den EP 12 463 und EP 40 867 werden hitzehärtbare Überzugsmittel beschrieben, welche über eine Umesterungsreaktion vernetzen. Die eingesetzten Vernetzer enthalten dabei $\beta$-Hydroxyestergruppierungen.

Der DE-OS 27 37 375 sind Umsetzungsprodukte von Polyepoxidharzen mit Polyaminen zu entnehmen, die pro Mol des Adduktes mit mindestens 2 Molen eines Monoepoxides oder einer Monocarbonsäure (Kettenlänge $C_8$ bis $C_{24}$) umgesetzt werden, wobei Monoepoxide bevorzugt sind. Als Vernetzungsmittel dienen Amino- und Phenoplaste.

In der DE-OS 33 11 514 werden Harnstoffkondensationsprodukte beschrieben, die sich als Bindemittelkomponenten in hitzehärtbaren Lacken eignen. Im Beispiel 6 dieser Anmeldung wird ein Harnstoffkondensationsprodukt zusammen mit einem Kondensationsprodukt aus einem Hexamethylendiamin/Polyepoxid-Additionsprodukt und dimerisierter Fettsäure zur Herstellung eines kathodisch abscheidbaren Elektrotauchlackes verwendet, der bereits bei 140° C Einbrenntemperatur sehr gute mechanische und korrosionsschützende Eigenschaften besitzt. Nachteilig bei diesem Bindemittel sind lediglich die leichte Oberflächenrauhigkeit und eine geringfügige Neigung zur Sedimentbildung im Bad.

In der DE-OS 2 001 232 und der DE-OS 1 930 949 werden Umsetzungsprodukte aus polyfunktionellen Aminoalkoholen, die durch Reaktion von Polyepoxyverbindungen und sekundären Alkanolaminen erhalten werden, mit Carbonsäuren beschrieben. Als Vernetzungsmittel für diese Umsetzungsprodukte dienen Amino- oder Phenoplaste. Jedoch lassen Überzüge, die diese Bindemittel enthalten, bezüglich der Korrosionsbeständigkeit zu wünschen übrig.

Aufgabe der vorliegenden Erfindung war es Bindemittelzusammensetzungen zu finden, die den Überzügen verbesserte Eigenschaften in Bezug auf die Korrosionsfestigkeit verleihen.

Gegenstand der vorliegenden Erfindung ist ein Bindemittel für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, das dadurch gekennzeichnet ist, daß das Bindemittel im wesentlichen besteht aus einem Gemisch aus

(A) 50 bis 90 Gew.-% eines stickstoffbasische Gruppen tragenden Polyadditions-/Polykondensationsproduktes, erhältlich durch Umsetzung von

(a) einem Additionsprodukt aus sekundärem Amin und einem Glycidylpolyether eines mehrwertigen Phenols, wobei das Additionsprodukt noch freie Epoxidgruppen enthält, mit

(b) einem primäre Aminogruppen enthaltenden Kondensationsprodukt aus einem mindestens 4 Kohlenstoffatome enthaltenden primären Diamin und mindestens einer mindestens 6 Kohlenstoffatome enthaltenden Mono- und/oder Dicarbonsäure, mit der Maßgabe, daß auf jede freie Epoxidgruppe des Additionsproduktes (a) mindestens eine primäre Aminogruppe des Kondensationsproduktes (b) eingesetzt worden ist, und

(B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert.

Bevorzugt sind erfindungsgemäße Bindemittel, bei welchen zur Herstellung der Komponente (b) als Dicarbonsäure eine Dimerfettsäure und/oder als Monocarbonsäure eine gesättigte oder ungesättigte Fettsäure eingesetzt worden ist.

Zur Herstellung der Komponente (a) wird vorzugsweise als sekundäres Amin ein Dialkylamin eingesetzt, das 2 bis 36 Kohlenstoffatome sowie gegebenenfalls noch funktionelle Gruppen enthält.

Als Vernetzungsmittel (B) werden mehrwertige geblockte Isocyanate, Aminoplast- oder Phenoplastharze, mehrfach aminomethylierte Polyphenole, über Esteraminolyse und/oder Umesterung härtende Vernetzer oder Harnstoffkondensationsprodukte bevorzugt.

Gegenstand der vorliegenden Erfindung ist auch die Verwendung des durch Protonieren mit Säure wasserverdünnbaren erfindungsgemäßen Bindemittels in Form einer wäßrigen Dispersion, die gegebenenfalls Pigmente, organische Lösemittel und/oder weitere Hilfsstoffe enthält, als Überzugsmittel,

ein wäßriges Lackbad für die kathodische Elektrotauchlackierung, das 5 bis 30 Gew. % des erfindungsge-mäßen Bindemittels enthält

2

sowie der mit einem Lacküberzug versehene Gegenstand, der durch Aufbringen des erfindungsgemäßen Bindemittels bzw. Überzugsmittels und Einbrennen erhalten worden ist.

Zu den Aufbaukomponenten des erfindungsgemäßen Bindemittels ist im einzelnen folgendes auszuführen.

Komponente (A) ist ein stickstoffbasische Gruppen tragendes Polyadditions-/Polykondensationsprodukt, erhältlich durch Umsetzung der Komponenten (a) und (b).

Komponente (a) ist ein Additionsprodukt aus sekundärem Amin und Polyepoxidverbindung, wobei das Additionsprodukt noch freie Epoxidgruppen enthält.

Für die Herstellung der Komponente (a) können die folgenden mehrwertigen Phenolen verwendet werden: Resorcin, Hydrochinon, p,p'-Dihydroxyphenylpropan (Bisphenol A), p,p'-Dihydroxybenzophenon, p,p'-Dihydroxydiphenyl, p,p'-Dihydroxydiphenylethan, Bis-(2-hydroxynaphthyl)-methan, 1,5-Dihydroxynaphthylen und Novolake; Bisphenol A wird bevorzugt. Die Polyphenole lassen sich durch Umsetzung mit Epihalogenhydrin, insbesondere Epichlorhydrin, in die Polyepoxide überführen. Polyepoxide mit niedrigem Molekulargewicht entstehen bei Verwendung eines großen Überschusses an Epihalogenhydrin, solche mit höherem Molekulargewicht werden bei Verwendung von geringen Mengen an Epihalogenhydrin, oder durch Umsetzung von Polyepoxiden mit niedrigem Molekulargewicht mit Polyphenol erhalten. Zur Herstellung der erfindungsgemäßen Bindemittel werden bevorzugt Diglycidylether von Bisphenol A mit Epoxidäquivalentgewichten von etwa 180 bis 2500 eingesetzt.

Zur Herstellung der Komponente (a) werden die Polyepoxide mit sekundären Aminen umgesetzt. Das Äquivalenzverhältnis zwischen Epoxid- und Aminogruppen kann in weiten Grenzen schwanken und beträgt im allgemeinen 1,1:1 bis 10:1, bevorzugt 1,4:1 bis 3,3:1. Die Umsetzung kann dabei in Substanz oder unter Zuhilfenahme von Lösemitteln erfolgen. Die Umsetzungstemperatur und -zeit kann in gewissen Grenzen variiert werden und hängt von der Art des eingesetzten sekundären Amins ab. Geeignet sind zum Beispiel Temperaturen von 20 bis 200° C, zur Erzielung einer raschen Umsetzung ist Erwärmen auf 50 bis 150° C zweckmäßig.

Als sekundäre Amine zur Herstellung der Komponente (a) können sekundäre Monoamine, z.B. Dialkylamine mit 2 bis 36 Kohlenstoffatomen, z.B. Dimethylamin, Diethylamin, Alkylalkanolamine, wie z.B. Methylethanolamin, Ethylethanolamin, Methylisopropanolamin, Dialkanolamine wie Diethanolamin oder Diisopropanolamin verwendet werden. Die sekundären Monoamine können auch noch weitere funktionelle Gruppen enthalten, sofern diese die Umsetzung der sekundären Amine mit den Polyepoxiden nicht stören. Die genannten sekundären Monoamine können allein oder als Mischungen eingesetzt werden, auch können zusätzlich sekundäre Diamine und in untergeordnetem Maße z.B. bis zu 20 Äquivalenzprozent der sekundären Amine, primäre/sekundäre oder diprimäre Diamine eingesetzt werden.

Zur Herstellung der Komponente (b) werden primäre Diamine mit mindestens 4 Kohlenstoffatomen mit mindestens 6 Kohlenstoffatome enthaltenden Mono- und/oder Dicarbonsäuren kondensiert. Beispiele geeigneter Diamine sind 1,4-Diaminobutan, 1,5-Diaminopentan, 1,6-Diaminohexan oder 2-Methylpentandiamin-1,6. Auch ethergruppenhaltige Diamine wie 4,9-Dioxadodecan-1,12-diamin und 4,7,10-Trioxatridecan-1,13-diamin können verwendet werden.

Geeignete Monocarbonsäuren sind z.B. alpha-Ethylhexansäure, iso-Nonansäure, Capryl-, Caprin-, Stearin-Säure, Linol-, Linolen-Säure sowie Benzoesäure.

Geeignete Dicarbonsäuren sind z.B. Adipinsäure, Sebacinsäure, Nonan-, Decan-, Dodecandicarbonsäure sowie vorzugsweise dimerisierte ungesättigte $C_{10}$-$C_{14}$-Fettsäure ("Dimerfettsäure"), z.B Pripol® 1014 der Firma Unilever, sowie Phthalsäure und Terephthalsäure oder Gemische dieser Carbonsäuren.

Zwar können Monocarbonsäuren auch allein eingesetzt werden, im allgemeinen ist es jedoch vorteilhaft, wenn Dicarbonsäuren mitverwendet werden. Umgekehrt können Dicarbonsäuren allein verwendet werden, was in vielen Fällen zu ausgezeichneten Bindemitteln führt, oft ist es jedoch vorteilhaft, untergeordnete Mengen an Monocarbonsäuren mitzuverwenden.

Die Umsetzung der Diamine mit den Carbonsäuren erfolgt im allgemeinen bei Temperaturen von 100 bis 250° C, vorzugsweise 150 bis 200° C. Zur leichteren Entfernung des bei der Kondensation gebildeten Wassers kann ein als Schleppmittel geeignetes Lösemittel, z.B. Toluol oder Xylol, zugegeben werden. Die Carbonsäuren können auch in Form ihrer Ester eingesetzt werden. In diesem Fall wird bei der Kondensation statt Wasser Alkohol abgespalten. Statt Fettsäuren können daher auch Fette, d.h. die Glycerinester der Fettsäuren, eingesetzt werden. Zur Herstellung der Komponente (b) werden die primären Diamine und die Carbonsäuren in Äquivalenzverhältnissen $NH_2$/COOH von etwa 2:1 bis 10:1, bevorzugt 2,5:1 bis 5:1, eingesetzt. Es stört dabei nicht, sondern kann im Gegenteil in vielen Fällen sogar erwünscht sein, daß das Produkt, je nach eingesetztem Äquivalenzverhältnis noch mehr oder weniger große Mengen an freiem Diamin enthält.

Die Komponenten (a) und (b) werden in einem solchen Verhältnis miteinander umgesetzt, daß auf jede freie Epoxidgruppe des Additionsproduktes (a) mindestens eine primäre Aminogruppe des Kondensationsproduktes (b) eingesetzt wird. Zur Begrenzung des Molekulargewichts ist es in den meisten Fällen angebracht, auf eine freie Epoxidgruppe des Additionsproduktes (a) mehr als eine, z.B. 1,05 bis 1,5 primäre Aminogruppen einzusetzen. Die Menge des Überschusses richtet sich nach der Höhe des erwünschten Molekulargewichts von (A), das etwa zwischen 500 bis 10000, bevorzugt zwischen 1500 und 5000 liegt. Bei Verwendung von primäre Aminogruppen enthaltenden Kondensationsprodukten (b), die eine größere Menge an Monocarbonsäuren enthalten, kann der Überschuß an primären Aminogruppen über Epoxidgruppen naturgemäß geringer gewählt werden als bei solchen Kondensationsprodukten, die ausschließlich oder überwiegend Dicarbonsäuren enthalten.

Die Umsetzung der Komponenten (a) und (b) kann bei Raumtemperatur durchgeführt werden, es ist jedoch zweckmäßig, zur Beschleunigung der Reaktion eine höhere Temperatur bis etwa 150°C, bevorzugt bis etwa 120°C zu wählen. Eine Reaktionszeit von 2 Stunden bei 70 bis 90°C ist im allgemeinen ausreichend.

Als Komponente (B) kommen im wesentlichen alle für den Einsatz in kathodischen Elektrotauchlacken geeigneten Vernetzer in Betracht.

Geeignete Vernetzungsmittel (B) sind z.B. Aminoplastharze, wie Harnstoff-Formaldehyd-Harze, Melaminharze oder Benzoguanaminharze, geblockte Isocyanatvernetzer, über Esteraminolyse und/oder Umesterung härtende Vernetzer mit im Mittel mindestens zwei aktivierten Estergruppen pro Molekül, z.B. β-Hydroxyalkylester-Vernetzer gemäß EP 0040867 und Carbalkoxymethylester-Vernetzer gemäß der deutschen Patentanmeldung P 32 33 139.8 und Harnstoffkondensationsprodukte, wie sie in der DE-OS 33 11 514 beschrieben sind.

Das Verhältnis der Komponenten (A) und (B) richtet sich nach Art und Anzahl der vernetzungsaktiven Gruppen in beiden Komponenten. Im allgemeinen wird ein Verhältnis (A) zu (B) von 1:1 bis 9:1, bevorzugt jedoch 1:1 bis 5:1, besonders bevorzugt 1,5:1 bis 4:1 verwendet.

Zur Herstellung von Überzugsmitteln können dem Bindemittel noch weitere Stoffe, wie Pigmente, Hilfsmittel, Lösemittel und Härtungskatalysatoren zugesetzt werden.

Die so hergestellten Überzugsmittel können durch übliche Methoden, wie Spritzen, Tauchen, Gießen und Rakeln auf Substrate wie Holz, Glas, Kunststoff oder Metall aufgebracht werden.

Die Aushärtung der Überzüge erfolgt je nach Art des Vernetzers zwischen 80 und 220°C während 40 bis 3 Minuten.

Nach Protonieren mit Säuren werden die erfindungsgemäßen Bindemittel wasserverdünnbar und können außer in herkömmlicher Weise auch durch kathodische Elektrotauchlackierung appliziert werden. Dabei werden elektrisch leitende Substrate beschichtet, wie Metallteile oder Bleche aus Messing, Kupfer, Zink, Aluminium, Eisen oder Stahl, die gegebenenfalls chemisch vorbehandelt, z.B. phosphatiert sind.

Zum Protonieren der Bindemittel können anorganische und organische Säuren eingesetzt werden. Besonders geeignet hierfür sind: Ameisensäure, Essigsäure, Propionsäure, Milchsäure und Phosphorsäure.

Für die kathodische Elektrotauchlackierung wird im allgemeinen ein Feststoffgehalt des Elektrotauchbades von 5 bis 45 Gew.%, bevorzugt 10 bis 30 Gew.% eingestellt. Die Abscheidung erfolgt üblicherweise bei Temperaturen von 15 bis 40°C während 30 bis 360 Sekunden. Der pH-Wert des Bades wird im allgemeinen zwischen 4,5 und 9,0, bevorzugt zwischen 5,0 und 8,0, besonders bevorzugt zwischen 6,8 und 8,0 eingestellt. Die Abscheidespannung wird zwischen 50 und 500 Volt eingestellt. Der zu beschichtende Gegenstand wird als Kathode geschaltet. Der abgeschiedene Film wird bei Temperaturen größer als 90°C eingebrannt.

Herstellung der Komponente (A)

Komponente (A 1):

Zunächst wurde ein Kondensationsprodukt (b1) hergestellt: In einem Laborkessel wurden 5800 g Hexamethylendiamin, 7250 g Dimerfettsäure (Pripol® 1014 der Firma Unichema) und 1400 g Leinölfettsäure langsam auf 195°C erhitzt und dabei das entstandene Wasser (540 g) abdestilliert. Nach dem Kühlen auf 100°C wurde mit 5961 g Toluol auf ein Feststoffgehalt von 70 Gew.% verdünnt. Das Produkt hatte eine Aminzahl von 197 (mg KOH/g).

In einem zweiten Gefäß wurde zunächst ein Additionsprodukt (a1) aus sekundärem Amin und einer Polyepoxidverbindung hergestellt: 10 Äquivalente eines Diglycidylethers auf Basis Bisphenol A und Epichlorhydrin mit einem Äquivalentgewicht von 485 (Epikote® 10001 der Firma Shell) wurden in einem Lösungsmittelgemisch aus 1039 g Toluol und 1039 g Isobutanol unter Erwärmen gelöst. Die entstandene 70 gew.%ige Lösung wurde auf 60°C gekühlt und mit 300,4 g Methylethanolamin und 128 g Isobutanol versetzt. Die Temperatur stieg innerhalb von 5 Minuten auf 78° C. Nach dieser Zeit wurden 1850 g des Kondensationsprodukts (b1) zugefügt und die Mischung 2 Stunden auf 80° C erwärmt. Das Produkt hatte eine Viskosität von 2300 mPa.s, gemessen bei 75° C mit einem Platte-Kegel-Viskosimeter der Firma Epprecht.

Komponente (A 2):

Es wurde wie bei der Herstellung von (b1) verfahren, dabei wurden jedoch die 1400 g Leinölfettsäure ersetzt durch zusätzliche 1450 g Dimerfettsäure (Pripol 1014). Das entstandene Produkte (b2) hatte eine Aminzahl von 190 und einen Festgehalt von 70 Gew.%, wobei freies Hexamethylendiamin als Feststoff gerechnet wurde.

In einem getrennten Gefäß wurden 1589 g Diglycidylether mit einem Epoxidäquivalentgewicht von 535, hergestellt aus Bisphenol A und Epichlorhydrin, in 731,3 g Isobutanol gelöst. Bei 60° C wurden 117,4 g Ethylethanolamin zugegeben, wobei anfängliches Kühlen und späteres Heizen die Temperatur 45 Minuten bei 70° C gehalten wurde. Das Produkt wird im folgenden als Additionsprodukt (a2) bezeichnet. In einem weiteren Gefäß wurden 312,4 g des Amidamins (b2) vorgelegt und auf 80° C erwärmt. Nun wurden innerhalb von 30 Minuten 1108 g (a2) zugesetzt und weitere 2 Stunden bei 80° C gehalten. Das Produkt hatte einen Feststoffgehalt von 70 Gew.% und eine Viskosität von 3400 mPa.s, gemessen bei 75° C mit einem Platte-Kegel-Viskosimeter.

Komponente (A 3):

Zunächst wurde wie bei Komponente (A 1) beschrieben, ein Kondensationsprodukt aus Diamin und Carbonsäuren hergestellt. Dabei wurde statt Hexamethylendiamin 2-Methylpentamethylendiamin-1,5 eingesetzt. Das Produkt (b3) hatte eine Aminzahl von 195 (mg KOH/g).

In einem weiteren Gefäß wurden 723 g Diglycidylether aus Bisphenol A und Epichlorhydrin (Epikote 1001 der Firma Shell) in 367 g Isobutanol gelöst und 63 g Diethanolamin bei 70° C zugegeben. Unter anfänglichem Kühlen und späterer Wärmezufuhr wurde die Temperatur 90 Minuten lang bei 70° C gehalten. 282,7 g des Kondensationsprodukts (b3) wurden in einem Glaskolben vorgelegt und das obige Additionsprodukt innerhalb von 5 Minuten bei 80° C zugegeben, wobei die Temperatur durch externe Kühlung bei dieser Temperatur gehalten wurden. Kurz nach Ende der Zugabe klang die exotherme Reaktion ab und es mußte Wärme zugeführt werden, um die Temperatur bei 80° C zu halten. Nach 2 Stunden bei 80° C hatte das Produkt eine Viskosität von 880 mPa.s, gemessen bei 100° C.

Komponente (A 4):

In einem Glasgefäß wurden 737,6 g eines aromatischen Epoxidharzes auf Basis Bisphenol A mit einem Epoxidäquivalentgewicht von 189 (Araldit® GY 2600 der Firma Ciba-Geigy), 178 g Bisphenol A und 0,24 g Triphenylphosphin unter Rühren auf 130° C erhitzt und 3 Stunden bei dieser Temperatur gehalten. Nach dem Abkühlen wurde mit 196,2 g Isobutanol und 196,2 g Toluol verdünnt. Der Epoxidwert der Lösung betrug 0,181 (Äquivalente Epoxid/100 g). Bei 65° C wurde eine Mischung aus 71,1 g Methylethanolamin und 23,7 g Wasser zugegeben. Innerhalb von 5 Minuten stieg die Temperatur auf 85° C. Nach dieser Zeit wurden 443,5 g des Kondensationsproduktes (b1) rasch zugegeben und 2 Stunden bei 80° C gehalten.

Herstellung der Komponenten (B):

Komponente (B 1):

504 g trimerisiertes Hexamethylendiisocyanat wurden in 382 g Methylisobutylketon gelöst. Unter Kühlen tropfte man bei 70° C 388 g Dibutylamin hinzu. Man rührte bis der Isocyanat-Wert nahe Null ist. Das Produkt hatte einen Feststoffgehalt von 70 Gew.%.

Komponente (B 2):

67 g Trimethylolpropan, 550,8 g Harnstoff und 2322 g Di-n-butylamin wurden vorgelegt. Mit Stickstoff wurde ein Innendruck von 4 bar eingestellt und die Temperatur unter Rühren auf 140° C erhöht. Der Innendruck von 4 bar wurde konstant gehalten. Nach ca. 0,5 Stunden wurde die Innentemperatur auf 165° C gesteigert und 522 g Hexamethylendiamin innerhalb von 1 Stunde mit Stickstoff in den Kessel gedrückt.

Nach Zulaufende wurde auf 210°C aufgeheizt, wobei auch weiterhin der Innendruck von 4 bar aufrechterhalten wurde. Nach insgesamt 8 Stunden Reaktionszeit wurde auf ca. 190°C abgekühlt, entspannt und überschüssiges Di-n-butylamin abdestilliert. Anschließend wurde auf 100°C abgekühlt und mit Methylisobutylketon so verdünnt, daß eine farblose bis leicht gelbliche Flüssigkeit mit einem Feststoffgehalt von 80 Gew.% entsteht.

Komponente (B 3):

Es wurde der über Transesterifikation vernetzende Polyester aus Beispiel IId) des europäischen Patents EP 40867 hergestellt.

Beispiele 1 bis 6:

Herstellung von Dispersionen:

Die Komponenten (A) und (B) wurden in den angegebenen Verhältnissen gemischt und mit 10 gew.%iger Essigsäure versetzt. Anschließend wurde durch langsame Wasserzugabe unter Rühren die Dispersion hergestellt.

| Dispersion von Bsp. | Komponente (A) | Komponente (B) | Essigsäure 10 gew.%ig | Wasser |
|---|---|---|---|---|
| 1 | 695 g (A 1) | 260 g (B 2) | 160 g | 3121 g |
| 2 | 695 g (A 1) | 298 g (B 1) | 160 g | 3083 g |
| 3 | 695 g (A 2) | 260 g (B 2) | 160 g | 3121 g |
| 4*) | 695 g (A 3) | 208 g (B 3) | 180 g | 3153 g |
| 5 | 695 g (A 3) | 260 g (B 2) | 160 g | 3121 g |
| 6 | 695 g (A 4) | 260 g (B 2) | 160 g | 3121 g |

*) vor der Wasserzugabe wurden 15 g Bleioctoat (24 Gew.% Pb) zugesetzt

Pigmentpaste:

Zu 525,8 g Komponente (A 1) gab man 168,7 g Butylglykol, 600 g Wasser und 16,5 g Essigsäure. Dann setzte man 800 g Titandioxid, 11 g Ruß und 50 g basisches Bleisilicat hinzu. Es wurde auf einer Kugelmühle bis zu einer Korngröße kleiner 9 μm gemahlen.
Anschließend stellte man mit Wasser einen Feststoffgehalt von 49 Gew.% ein.

Elektrotauchbäder:

Zu der jeweiligen Dispersion gab man unter Rühren 764 g der Pigmentpaste. Die Bäder wurden 120 Stunden bei 28°C gerührt. An kathodisch geschalteten zinkphosphatierten Prüftafeln aus Stahl wurden Lackfilme innerhalb 120 Sekunden bei der angegebenen Spannung abgeschieden und 20 Minuten bei 170°C eingebrannt. Die folgende Tabelle zeigt die Ergebnisse der Lackprüfung.

Ergebnisse der Lackprüfung, Schichtdicke 17 µm

| Beispiel | pH | Spannung | Umgriff nach Ford (cm) | Schlag-tiefung[2] (Nm) | Salzsprühtest nach ASTM Unterwanderung am Ritz | Lackoberfläche[1] |
|---|---|---|---|---|---|---|
| 1 | 7,6 | 300V | 22,0 | 18,08 | nach 500 Stunden 0,1 mm | 1 |
| 2 | 7,6 | 300V | 21,0 | " | nach 500 Stunden 0,2 mm | 1 |
| 3 | 7,55 | 310V | 22,0 | " | nach 500 Stunden 0,2 mm | 2 |
| 4 | 7,2 | 320V | 20,5 | " | nach 500 Stunden 0,3 mm | 2 (matt) |
| 5 | 7,3 | 300V | 20,5 | " | nach 500 Stunden 0,1 mm | 1-2 |
| 6 | 7,8 | 320V | 24,0 | " | nach 500 Stunden 0,1 mm | 1 |

[1] Bewertung: Note 1 = sehr gut bis 6 = ungenügend

[2] Gemessen mit einem mandrel impact tester der Fa. Gardner nach ASTM D 2794.

Patentansprüche

Patentansprüche für folgende Vertragsstaaten: BE, CH, DE, FR, GB, IT, LI, NL, SE

1. Bindemittel für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für die Polyadditions-/Polykondensationsprodukte, bestehend im wesentlichen aus einem Gemisch aus

(A) 50 bis 90 Gew.-% eines stickstoffbasische Gruppen tragenden Polyadditions-/Polykondensationsproduktes, erhältlich durch Umsetzung von

(a) einem Additionsprodukt aus sekundärem Amin und einem Glycidylpolyether eines mehrwertigen Phenols, wobei das Additionsprodukt noch freie Epoxidgruppen enthält,

mit

(b) einem primäre Aminogruppen enthaltenden Kondensationsprodukt aus einem mindestens 4 Kohlenstoffatome enthaltenden primären Diamin und mindestens einer mindestens 6 Kohlenstoffatome enthaltenden Mono- und/oder Dicarbonsäure, mit der Maßgabe, daß auf jede freie Epoxidgruppe des Additionsproduktes (a) mindestens eine primäre Aminogruppe des Kondensationsproduktes (b) eingesetzt worden ist,

und

(B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert.

2. Bindemittel nach Anspruch 1, in denen die zur Herstellung der Komponente (b) eingesetzte Dicarbonsäure eine dimerisierte, ungesättigte $C_{10}$-$C_{24}$-Fettsäure ("Dimerfettsäure") ist.

3. Bindemittel nach den Ansprüchen 1 und 2, in denen die zur Herstellung der Komponente (b) eingesetzte Monocarbonsäure eine gesättigte oder ungesättigte $C_8$-$C_{24}$-Fettsäure ist.

4. Bindemittel nach den Ansprüchen 1 bis 3, in denen als sekundäres Amin zur Herstellung des Additionsproduktes (a) ein Dialkylamin eingesetzt wird, das 2 bis 36 Kohlenstoffatome sowie gegebenenfalls noch funktionelle Gruppen enthält.

5. Bindemittel nach einem der vorhergehenden Ansprüche, in denen das Vernetzungsmittel (B) ein mehrwertiges geblocktes Isocyanat, ein Aminoplast- oder Phenoplastharz, ein mehrfach aminomethyliertes Polyphenol, ein über Esteraminolyse und/oder Umesterung härtender Vernetzer oder ein Harnstoffkondensationsprodukt ist.

6. Verwendung des durch Protonieren mit Säure wasserverdünnbaren Bindemittels gemäß den Ansprüchen 1 bis 5 in Form einer wäßrigen Dispersion, die gegebenenfalls Pigmente, organische Lösemittel und/oder weitere Hilfsstoffe enthält, als Überzugsmittel.

7. Wäßriges Lackbad für die kathodische Elektrotauchlackierung, enthaltend 5 bis 30 Gew.% eines Bindemittels gemäß den Ansprüchen 1 bis 5.

8. Mit einem Lacküberzug versehene Gegenstände, erhalten mit den Bindemitteln gemäß den Ansprüchen 1 bis 5.

9. Verfahren zur Herstellung eines Bindemittels für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, dadurch gekennzeichnet, daß man im wesentlichen

(A) 50 bis 90 Gew.-% eines stickstoffbasische Gruppen tragenden Polyadditions-/Polykondensationsproduktes, erhältlich durch Umsetzung von

(a) einem Additionsprodukt aus sekundärem Amin und einem Glycidylpolyether eines mehrwertigen Phenols, wobei das Additionsprodukt noch freie Epoxidgruppen enthält,

mit

(b) einem primäre Aminogruppen enthaltenden Kondensationsprodukt aus einem mindestens 4 Kohlenstoffatome enthaltenden primären Diamin und mindestens einer mindestens 6 Kohlenstoffatome enthaltenden Mono- und/oder Dicarbonsäure, mit der Maßgabe, daß auf jede freie Epoxidgruppe des Additionsproduktes (a) mindestens eine primäre Aminogruppe des Kondensationsproduktes (b) eingesetzt worden ist,

und

(B) 10 bis 50 Gew.% eines Vernetzungsmittels, das bei Raumtemperatur mit Komponente (A) nicht

EP 0 224 221 B1

reagiert, bei erhöhter Temperatur jedoch mit Komponente (A) unter Vernetzung reagiert, mischt.

**Patentanspruch für folgende Vertragsstaaten : AT, ES**

1. Verfahren zur Herstellung eines Bindemittels für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, dadurch gekennzeichnet, daß man im wesentlichen

   (A) 50 bis 90 Gew.-% eines stickstoffbasische Gruppen tragenden Polyadditions-/Polykondensationsproduktes, erhältlich durch Umsetzung von

   (a) einem Additionsprodukt aus sekundärem Amin und einem Glycidylpolyether eines mehrwertigen Phenols, wobei das Additionsprodukt noch freie Epoxidgruppen enthält,

   mit

   (b) einem primäre Aminogruppen enthaltenden Kondensationsprodukt aus einem mindestens 4 Kohlenstoffatome enthaltenden primären Diamin und mindestens einer mindestens 6 Kohlenstoffatome enthaltenden Mono- und/oder Dicarbonsäure, mit der Maßgabe, daß auf jede freie Epoxidgruppe des Additionsproduktes (a) mindestens eine primäre Aminogruppe des Kondensationsproduktes (b) eingesetzt worden ist,

   und

   (B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert,

   mischt.

## Claims
### Claims for the following Contracting States : BE, CH, DE, FR, GB, IT, LI, NL, SE

1. A binder for cathodic electrocoating which is based on polyadducts/polycondensates which carry basic nitrogen groups and are rendered water-dilutable by protonation with an acid, and one or more crosslinking agents for the polyadducts/polycondensates, essentially consisting of a mixture of

   (A) from 50 to 90% by weight of a polyadduct/polycondensate which carries basic nitrogen groups and is obtainable by reacting

   (a) an adduct of a secondary amine and a glycidyl polyether of a polyhydric phenol, the adduct still containing free epoxide groups,

   with

   (b) a condensate which contains primary amino groups and is obtained from a primary diamine of not less than 4 carbon atoms and one or more mono- and/or dicarboxylic acids of not less than 6 carbon atoms, with the proviso that one or more primary amino groups of the condensate (b) are used per free epoxide group of the adduct (a),

   and

   (B) from 10 to 50% by weight of a crosslinking agent which does not react with component (A) at room temperature but reacts with the latter at elevated temperatures with crosslinking.

2. A binder as claimed in claim 1, wherein the dicarboxylic acid used for the preparation of component (b) is a dimerized, unsaturated $C_{10}$-$C_{24}$-fatty acid ("dimer fatty acid").

3. A binder as claimed in claim 1 or 2, wherein the monocarboxylic acid used for the preparation of component (b) is a saturated or unsaturated $C_8$-$C_{24}$-fatty acid.

4. A binder as claimed in any of claims 1 to 3, wherein a dialkylamine which contains 2 to 36 carbon atoms and may also contain functional groups is used as the secondary amine for the preparation of the adduct (a).

5. A binder as claimed in any of the preceding claims, wherein the crosslinking agent (B) is a polyvalent blocked isocyanate, an aminoplast resin or phenoplast resin, a polyaminomethylated polyphenol, a crosslinking agent which undergoes curing via esteraminolysis and/or transesterification, or a urea condensate.

9

6. Use of a binder which is rendered water-dilutable by protonation with an acid as claimed in any of claims 1 to 5, in the form of an aqueous dispersion which may contain pigments, organic solvents and/or further assistants as a coating agent.

7. An aqueous cathodic electrocoating bath containing from 5 to 30% by weight of a binder as claimed in any of claims 1 to 5.

8. An article which is provided with a coating and obtained using a binder as claimed in any of claims 1 to 5.

9. A process for the preparation of a binder for cathodic electrocoating which is based on polyadducts/polycondensates which carry basic nitrogen groups and are rendered water-dilutable by protonation with an acid, and one or more crosslinking agents for these polyadducts/polycondensates, wherein essentially

(A) from 50 to 90% by weight of a polyadduct/polycondensate which carries basic nitrogen groups and is obtainable by reacting

(a) an adduct of a secondary amine and a glycidyl polyether of a polyhydric phenol, the adduct still containing free epoxide groups,

with

(b) a condensate which contains primary amino groups and is obtained from a primary diamine of not less than 4 carbon atoms and one or more mono- and /or dicarboxylic acids of not less than 6 carbon atoms, with the proviso that one or more primary amino groups of the condensate (b) are used per free epoxide group of the adduct (a),

and

(B) from 10 to 50% by weight of a crosslinking agent which does not react with component (A) at room temperature but reacts with the latter at elevated temperatures with crosslinking,

are mixed.

**Claim for the following Contracting States : AT, ES**

1. A process for the preparation of a binder for cathodic electrocoating which is based on polyadducts/polycondensates which carry basic nitrogen groups and are rendered water-dilutable by protonation with an acid, and one or more crosslinking agents for these polyadducts/polycondensates, wherein essentially

(A) from 50 to 90% by weight of a polyadduct/polycondensate which carries basic nitrogen groups and is obtainable by reacting

(a) an adduct of a secondary amine and a glycidyl polyether of a polyhydric phenol, the adduct still containing free epoxide groups,

with

(b) a condensate which contains primary amino groups and is obtained from a primary diamine of not less than 4 carbon atoms and one or more mono- and/or dicarboxylic acids of not less than 6 carbon atoms, with the proviso that one or more primary amino groups of the condensate (b) are used per free epoxide group of the adduct (a),

and

(B) from 10 to 50% by weight of a crosslinking agent which does not react with component (A) at room temperature but reacts with the latter at elevated temperatures with crosslinking,

are mixed.

**Revendications**

**Revendications pour les Etats contractants suivants : BE, CH, DE, FR, GB, IT, LI, NL, SE**

1. Liants pour le laquage par électrodéposition cathodique à base de produits de polyaddition/polycondensation portant des groupes basiques azotés, qui sont diluables à l'eau par protonation au moyen d'un acide, et à base d'au moins un agent de réticulation pour les produits de polyaddition/polycondensation, consistant essentiellement en un mélange de

(A) 50 à 90% en poids d'un produit de polyaddition/polycondensation portant des groupes basiques azotés, que l'on obtient par réaction de

(a) un produit d'addition formé à partir d'une amine secondaire et d'un polyéther glycidylique d'un phénol polyvalent, le produit d'addition contenant encore des groupes époxyde libres,
avec

(b) un produit de condensation contenant des groupes amino primaires formé a partir d'une diamine primaire contenant au moins 4 atomes de carbone et d'au moins un acide mono- et/ou dicarboxylique contenant au moins 6 atomes de carbone, étant spécifié que pour chaque groupe époxyde libre du produit d'addition (a) au moins un groupe amino primaire du produit de condensation (b) est mis en oeuvre,

et

(B) 10 à 50% en poids d'un agent de réticulation, qui ne réagit pas avec le composant (A) à la température ambiante, mais qui réagit avec le composant (A) à température élevée en provoquant une réticulation.

2. Liants suivant la revendication 1, dans lesquels l'acide dicarboxylique mis en oeuvre pour préparer le composant (b) est un acide gras en $C_{10}$-$C_{24}$ dimérisé, non saturé ("acide gras dimère").

3. Liants suivant les revendications 1 et 2, dans lesquels l'acide monocarboxylique mis en oeuvre pour la préparation du composant (b) est un acide gras en $C_8$-$C_{24}$ saturé ou non saturé.

4. Liants suivant les revendications 1 à 3, dans lesquels, en tant qu'amine secondaire pour la préparation du produit d'addition (a), est mise en oeuvre une dialkylamine contenant 2 à 36 atomes de carbone ainsi qu'éventuellement encore des groupes fonctionnels.

5. Liants suivant l'une des revendications précédentes, dans lesquels l'agent de réticulation (B) est un isocyanate polyvalent bloqué, une résine aminoplaste ou phénoplaste, un polyphénol aminométhylé plusieurs fois, un agent de réticulation durcissant par esteraminolyse et/ou transestérification ou un produit de condensation de l'urée.

6. Utilisation du liant diluable à l'eau par protonation au moyen d'un acide suivant les revendications 1 à 5 sous forme d'une dispersion aqueuse, contenant éventuellement des pigments, des solvants organiques et/ou d'autres adjuvants, comme agent de revêtement.

7. Bain de laquage aqueux pour le laquage par électrodéposition cathodique, contenant 5 à 30% en poids d'un liant suivant les revendications 1 à 5.

8. Objets pourvus d'un revêtement de laque, obtenus avec les liants suivant les revendications 1 à 5.

9. Procédé de préparation d'un liant pour le laquage par électrodéposition cathodique à base de produits de polyaddition/polycondensation portant des groupes basiques azotés, qui sont diluables à l'eau par protonation au moyen d'un acide, et à base d'au moins un agent de réticulation pour ces produits de polyaddition/polycondensation, caractérisé en ce que l'on mélange essentiellement

(A) 50 à 90% en poids d'un produit de polyaddition/polycondensation portant des groupes basiques azotés, que l'on obtient par réaction de

(a) un produit d'addition formé à partir d'une amine secondaire et d'un polyéther glycidylique d'un phénol polyvalent, le produit d'addition contenant encore des groupes époxyde libres,
avec

(b) un produit de condensation contenant des groupes amino primaires formé à partir d'une diamine primaire contenant au moins 4 atomes de carbone et d'au moins un acide mono- et/ou dicarboxylique contenant au moins 6 atomes de carbone, étant spécifié que pour chaque groupe époxyde libre du produit d'addition (a) au moins un groupe amino primaire du produit de condensation (b) est mis en oeuvre;

et

(B) 10 à 50% en poids d'un agent de réticulation, qui ne réagit pas avec le composant (A) à la température ambiante, mais qui réagit avec le composant (A) à température élevée en provoquant une réticulation.

**Revendication pour les Etats contractants suivants : AT, ES**

1. Procédé de préparation d'un liant pour le laquage par électrodéposition cathodique à base de produits de polyaddition/polycondensation portant des groupes basiques azotés, qui sont diluables à l'eau par protonation au moyen d'un acide, et à base d'au moins un agent de réticulation pour ces produits de polyaddition/polycondensation, caractérisé en ce que l'on mélange essentiellement

(A) 50 à 90% en poids d'un produit de polyaddition/polycondensation portant des groupes basiques azotés, que l'on obtient par réaction de

(a) un produit d'addition formé à partir d'une amine secondaire et d'un polyéther glycidylique d'un phénol polyvalent, le produit d'addition contenant encore des groupes époxyde libres,

avec

(b) un produit de condensation contenant des groupes amino primaires formé à partir d'une diamine primaire contenant au moins 4 atomes de carbone et d'au moins un acide mono- et/ou dicarboxylique contenant au moins 6 atomes de carbone, étant spécifié que pour chaque groupe époxyde libre du produit d'addition (a) au moins un groupe amino primaire du produit de condensation (b) est mis en oeuvre;

et

(B) 10 à 50% en poids d'un agent de réticulation, qui ne réagit pas avec le composant (A) à la température ambiante, mais qui réagit avec le composant (A) à température élevée en provoquant une réticulation.